# EUROPEAN PATENT SPECIFICATION

(11) **EP 2 205 473 B1**
(45) Date of publication and mention of the grant of the patent: **07.11.2018**
(21) Application number: 08796413.6
(22) Date of filing: 22.07.2008
(51) Int. Cl.: B61L 27/00, H04L 29/08, H04L 12/24

(54) **METHOD AND APPARATUS FOR REMOTELY MONITORING RAILROAD EQUIPMENT USING NETWORK PROTOCOLS**
VERFAHREN UND VORRICHTUNG ZUR ABGESETZTEN ÜBERWACHUNG VON EISENBAHNAUSRÜSTUNG UNTER VERWENDUNG VON NETZWERKPROTOKOLLEN
MÉTHODE ET APPAREIL DE SURVEILLANCE À DISTANCE D'ÉQUIPEMENT DE VOIE FERRÉE À L'AIDE DE PROTOCOLES RÉSEAU

(30) Priority: 26.09.2007 US 975436 P; 27.12.2007 US 965446
(43) Date of publication of application: 14.07.2010
(73) Proprietor: ALSTOM Transport Technologies, 93400 Saint-Ouen (FR)
(72) Inventor: FRIES, Jeffrey, Michael, Lee's Summit Missouri 64082 (US); WEINGARTNER, Aric Albert, Lee's Summit Missouri 64086 (US); HERINCKX, Derald, J., Overland Park Kansas 66221 (US)
(74) Representative: Lavoix
(86) International application number: PCT/US2008/070738
(87) International publication number: WO 2009/042283

(56) References cited:
- WO-A-02/31793
- WO-A-97/16336
- FURMAN E L ED - INSTITUTE OF ELECTRICAL AND ELECTRONICS ENGINEERS: "Network management for ATCS communications systems" PROCEEDINGS OF THE IEEE/ASME JOINT RAILROAD CONFERENCE. ST. LOUIS, MAY 21 - 23, 1991; [PROCEEDINGS OF THE IEEE/ASME JOINT RAILROAD CONFERENCE], NEW YORK, IEEE, US, vol. -, 21 May 1991 (1991-05-21), pages 71-77, XP010047402 ISBN: 978-0-7803-0072-9

## Description

This invention relates to remotely monitoring railroad equipment.

### BACKGROUND

WO 97/16336 discloses a railroad transportation network management system. A wayside occupancy detector detects when a train has passed a particular geographic latitude and longitude on a transportation network. A very large number of wayside occupancy detectors, perhaps on the order of ten thousand or more, are distributed throughout the transportation network. The wayside occupancy detectors are coupled to a computer aided dispatching system and transmit train detection signals to the computer aided dispatching system.

When an event occurs within a railroad system such as a malfunctioning railroad at a grade crossing warning system, a broken rail, a signal lamp out, or a communication link collapse, such occurrences may only be visible to the railroad at a macro level until there is a system-wide issue such as when an entire network of signals turn red, or when notified by public or local municipalities. As such, a railroad office with macro visibility has limited information to troubleshoot further. Accordingly, the railroad office is required to dispatch a maintainer to visually identify and troubleshoot the anomaly at the site of the event.

In addition, the Federal Railroad Administration (FRA) has regulations (CFR 236, Subpart H) that require railroads to develop a software configuration management plan for all safety critical processor-based controllers. Such a software configuration management plan is difficult to achieve using existing monitoring systems.

### SUMMARY

The present invention provides a method for remotely monitoring railroad equipment as defined in claim 1 and a system for remotely monitoring railroad equipment as defined in claim 8.

Embodiments of the invention remotely monitor railroad devices using data structures corresponding to each of the railroad devices. The railroad devices are located within a railroad infrastructure (e.g., geographically dispersed throughout the area of a railroad) and populate the corresponding data structure with data representing a state of the railroad device. A computing device communicates with the railroad devices to receive the populated data structures and analyze the data therein to monitor and diagnose the railroad devices. In an embodiment, the populated data structures are pushed to the computing device, e.g., transmitted without prompting from the computer device.

### BRIEF DESCRIPTION OF THE DRAWINGS

Figure 1 is an exemplary block diagram of a prior art Management Information Base data structure.
Figure 2 is a block diagram of an exemplary railroad network system.
Figure 3 is a flow chart illustrating exemplary operations performed to remotely monitor railroad devices.
Figure 4 is a block diagram of exemplary Simple Network Management Protocol (SNMP) traps in a railroad signaling system.
Figure 5 is an exemplary user interface showing a table with software configuration management data (e.g., part numbers, versions, CRC, or the like) from a network connected railroad device.
Figure 6 is an exemplary user interface showing a table with hardware and system status information (e.g., track circuit voltage, current, occupancy, and health information, or the like) from a network connected railroad device.
Figure 7 is an exemplary user interface showing analog or digital information (e.g., track circuit ballast, train movement, or the like) in graphical representation via polling a network connected railroad device.
Figure 8 is an exemplary block diagram showing a Management Information Base data structure common to all devices in a private enterprise.
Figure 9 is an exemplary block diagram showing a Management Information Base data structure unique to a particular railroad device.
Figure 10 is an exemplary user interface showing configuration of the SNMP traps.

### DETAILED DESCRIPTION

Embodiments of the invention enable remote monitoring and diagnosis of railroad equipment using network protocols. In an embodiment, the invention uses an Internet Protocol (IP) network infrastructure that includes Simple Network Management Protocol (SNMP) protocols with one or more associated Management Information Base or Block (MIB) data structures and network management tools to enable remote monitoring and diagnostics of railroad equipment. Each piece of railroad equipment has a MIB associated therewith, and includes support for IP and SNMP functionality either natively (e.g., internally) or by an add-on device or logic. The network management system uses the MIB to build requests for information from the networked railroad devices using SNMP (e.g., solicited data). Alternatively or in addition, the railroad equipment is configured to send SNMP traps to the network management system (e.g., unsolicited data). The traps are used to remotely notify an operator of alarms triggered within the railroad system. The traps may be displayed to the operator graphically or by means of populating data fields in a data table in a user interface. Accordingly, embodiments of the invention provide railroad operators with rich information in real-time via SNMP for remote monitoring and diagnosis of equipment failure to reduce maintenance costs. The railroad equipment may be polled regularly or on-demand for data to indicate predictive maintenance or troubleshooting. Embodiments of the invention are operable with any data describing the client including, but not limited to, fault data, configuration data, safety data, operating parameters, or a digital representation of analog data from the railroad equipment.

In an embodiment, the term "IP" and "FRA" refer to "Internet Protocol" and the "Federal Railroad Administration" respectively.

In an embodiment, the term "SNMP" refers to a "Simple Network Management Protocol." SNMP operates over the Transport Control Protocol/Internet Protocol.

In an embodiment, the term "NMS" refers to a "Network Management Server/Station/Software." An NMS polls information from SNMP agents or other clients in a network that has data retrievable via SNMP.

In an embodiment, the term "MIB" refers to a "Management Information Base" or "Management Information Block." A MIB is a data structure or file with data fields corresponding to data that may be gathered from a railroad device.

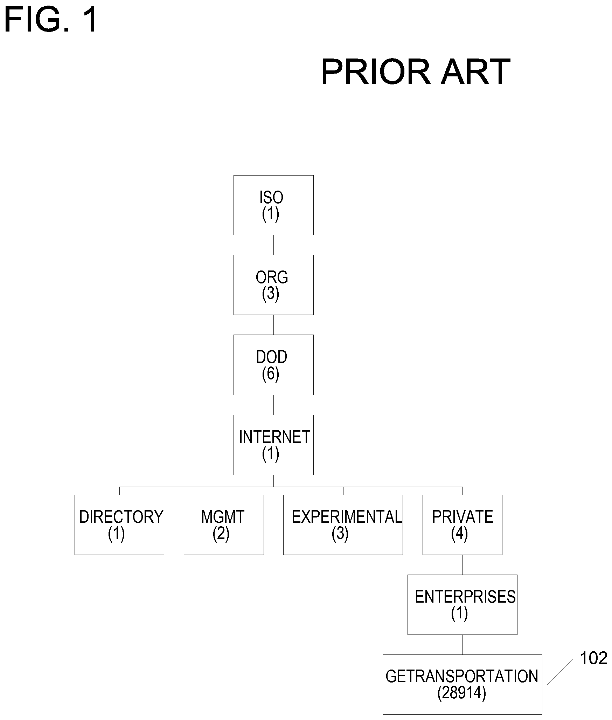

Referring first to Figure 1, a MIB 102 is shown at a high level. While embodiments of the invention are described with reference to sample MIBs, any data structure that is created to support any railroad device is within the scope of embodiments of the invention. That is, aspects of the invention are not limited to the particular MIBs described and illustrated herein.

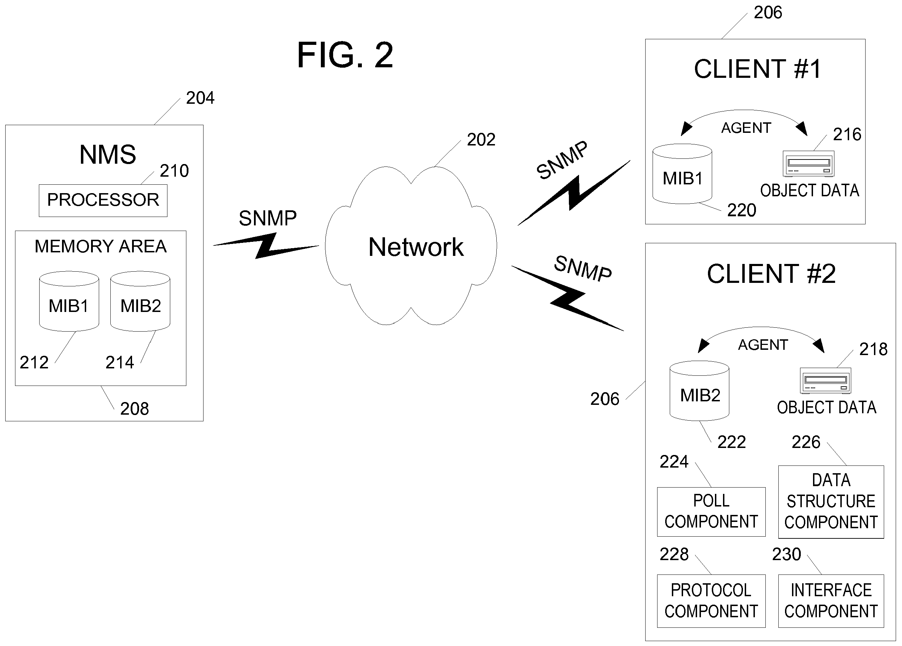

Referring next to Figure 2, the invention includes a communications network 202 that electronically couples at least one NMS 204 and at least one railroad device or other client 206 such as client #1 or client #2. The NMS 204 has at least a memory area 208 and a processor 210. The memory area 208 stores a MIB 212, 214 corresponding to each type of client 206. The stored MIB 212, 214 may be a MIB common to several clients or common to a private enterprise. In the example of Figure 2, MIB1 212 and MIB2 214 correspond to client #1 and client #2 respectively. The clients 206 are positioned or located in a railroad infrastructure (e.g., a device along a railroad track, or a locomotive moving along a railroad track) and include railroad devices such as locomotives, onboard control systems, wayside controllers, crossing controllers, signaling devices, switch machines, switch monitoring or control systems, train inspection systems, and diagnostic devices. As an example, the clients 206 include vital railroad devices for monitoring the safety of the railroad. In other examples, the clients 206 include non-vital devices such as hot box detectors, recorders, and the like.

In an embodiment, an agent operating on each of the clients 206 populates or otherwise stores data about the client 206 into the appropriate fields within the MIB data structure 220, 222. The processor 210 in the NMS 204 is configured to execute computer-executable instructions for requesting information from the clients 206 and receiving data via SNMP from one or more of the clients 206 where the received data is formatted according to the MIB for that client 206. The received data includes any data from the client 206. In the example of Figure 2, the NMS 204 is located remotely from the clients 206 yet is accessible via the network 202. The processor 210 in the NMS 204 is further configured to execute computer-executable instructions for analyzing the received data as a function of the MIB 212, 214 to assess a state of the client 206.

In an embodiment, each client 206 is identified by an object identifier. The object identifier is unique to the type of client 206 (e.g., railroad equipment model or type) relative to other clients 206. Data (e.g., object data 216, 218) about each client 206 is mapped from the client 206 into the corresponding MIB 220, 222 by means of the agent through the unique object identifier associated with the client 206. The data is mapped into the memory locations of the MIB data structures 220, 222 as a function of the object identifier for the client 206.

In an exemplary embodiment, the NMS 204 and the clients 206 communicate via messages transmitted over the network 202 using SNMP. For example, messages from the NMS 204 to the client 206 may include, but are not limited to "GET", "GET_NEXT", and "GET BULK" to retrieve readable objects from the MIB data structure through the client 206. Another example of a message from the NMS 204 to the client 206 is "SET" to write settable objects to the client 206. In an embodiment, the client 206 transmits to the NMS 204 a "GET_RESPONSE", in acknowledgement of a "GET" or "SET" request and supplies data for the "GET" request in the form of data fields that populate a data table in real time. Another example of a message from the client 206 to the NMS 204 is "TRAP", which sends unsolicited alerts to the NMS 204 pertaining to the status of railroad machinery. Such alerts may be pre-configured and then triggered when an absolute network fault, equipment fault, or external fault is detected. In alternate embodiment, alerts are triggered when equipment monitoring is performed at uniform intervals in time or at a minimum threshold deviation of external parameters, equipment or network performance from a set value.

In an embodiment, each of the railroad devices (e.g., clients 206) is polled periodically by the NMS 204 to determine the status of the railroad device or by the agent to populate the MIB data structures 220, 222. Current data from the MIB 220, 222 is returned to the NMS 204 responsive to the polling. In an embodiment, the MIB data structures 220, 222 are continually populated with object data 216, 218 by the clients 206. Alternatively or in addition, the MIB data structures 220, 222 are populated by the clients 206 with object data 216, 218 in response to receiving a poll request.

One or more computer-readable media associated with the clients 206 store computer-executable components for monitoring the railroad devices. In the example of Figure 2, client #2 has a poll component 224, a data structure component 226, a protocol component 228, and an interface component 230. While these components are illustrated within client #2, the components may be stored in a memory area external to client #2, and may be associated with any of the clients 206 or railroad devices. The poll component 224 generates status data (e.g., object data 218) by periodically polling the client 206. For example, the generated status data or object data 218 includes data derived from an analog measurement of an operating parameter of the client 206. The data structure component 226 stores the status data representing a state of a railroad device in a memory area for client #2. The protocol component 228 generates communication data, as a function of a network management protocol, from the status data by the data structure component 226. The communication data includes the status data formatted as a MIB 222. The interface component 230 communicates the communication data generated by the protocol component 228 from the client 206 to a computing device (e.g., the NMS 204) via the network management protocol. The computing device interprets and analyzes the status data as a function of the MIB 214 to monitor the client 206. In an embodiment, the poll component 224, the data structure component 226, the protocol component 228, and the interface component 230 are embedded within the railroad device or within a closely-coupled device, appliance, or logic. In this example, MIB 222 and MIB 214 have the same structure thus allowing the NMS 204 to interpret the communication data received from the client 206.

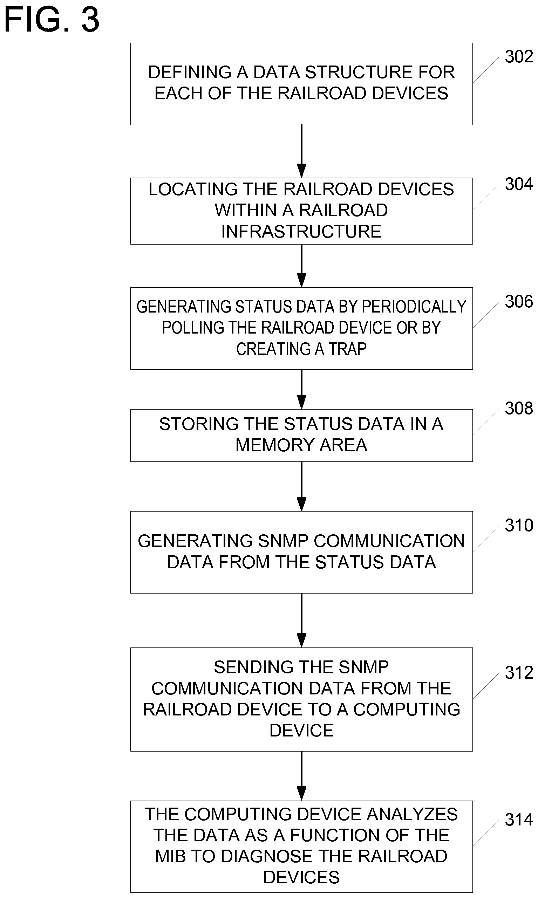

Referring next to Figure 3, an exemplary flow chart illustrates a method for monitoring railroad equipment. At 302, a data structure corresponding to one or more of a plurality of railroad devices is defined (e.g., a MIB). For example, the data structure may correspond to more than one of the railroad devices. The railroad devices are positioned within a railroad infrastructure (e.g., along a railroad track) at 304. Each of the railroad devices populates the corresponding defined data structure (e.g., the MIBs) with data representing a state of the railroad device periodically or upon request. For example, at 306, status data is generated for each railroad device by periodically polling the railroad device, or by the railroad device creating a trap. The polling may be performed by an agent local to or remote from the railroad device. Alternatively or in addition, the railroad device may send unsolicited status data (e.g., traps or alarms). At 308, the status data is stored in a memory area corresponding to the railroad device. At 310, SNMP communication data is generated at the railroad device based on the status data. At 312, the SNMP data is sent to a computing device (e.g., the network management server). The computing device analyzes the status data in the SNMP data at 314 to monitor and/or diagnose each of the railroad devices. The computing device is able to perform the analysis because the computing device interprets the status data using the MIB data structure.

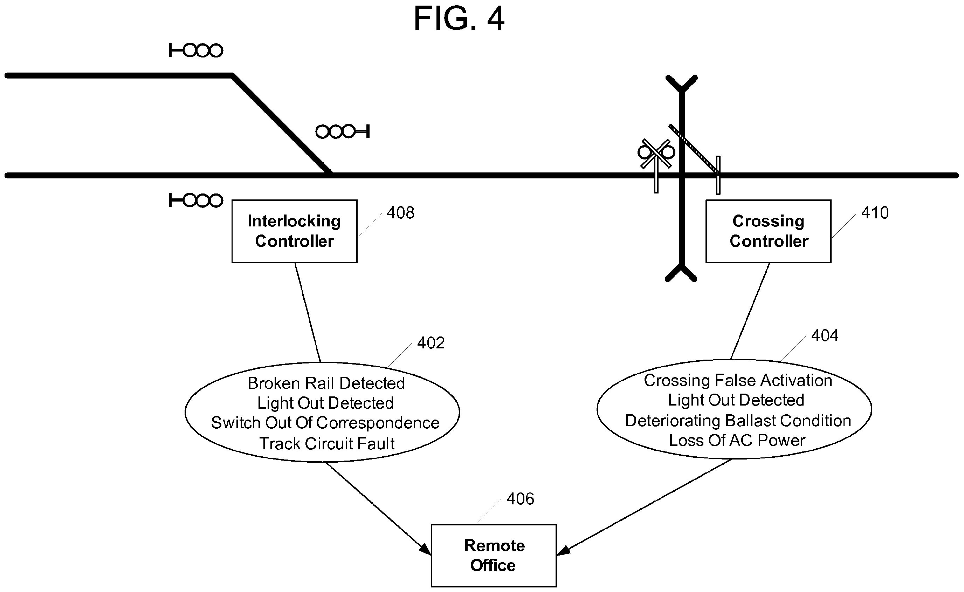

Referring next to Figure 4, in an embodiment, SNMP traps such as traps 402 and 404 may be used to alert an operator or remote railroad office such as 406 of a problem while providing key data that may facilitate reducing the overall maintenance time. The traps 402 and 404 may be one or more of a discrete SNMP trap, a digital SNMP trap, and an analog SNMP trap. However, aspects of the invention are not limited to the trap features disclosed herein. The SNMP traps 402, 404 are transmitted in the MIB data structure for the particular railroad device (e.g., interlocking controller 408 and crossing controller 410), for example, on a real time basis. In an exemplary embodiment, SNMP traps 402, 404 may be used to alert the operator of a broken rail, a falsely activated railroad at grade crossing, and a light out. The SNMP traps 402, 406 may also provide an indication of the duration of problem existence. The SNMP traps 402, 406 may include data for textual or graphical display to the operator. The SNMP 402, 406 traps may also provide an indication of the location of the problem within the system (e.g., module, output, port) so a maintainer or technician may bring the correct replacement device to the site. Accordingly, embodiments of the invention provide the operator with more information in real-time leading to reduced maintenance costs.

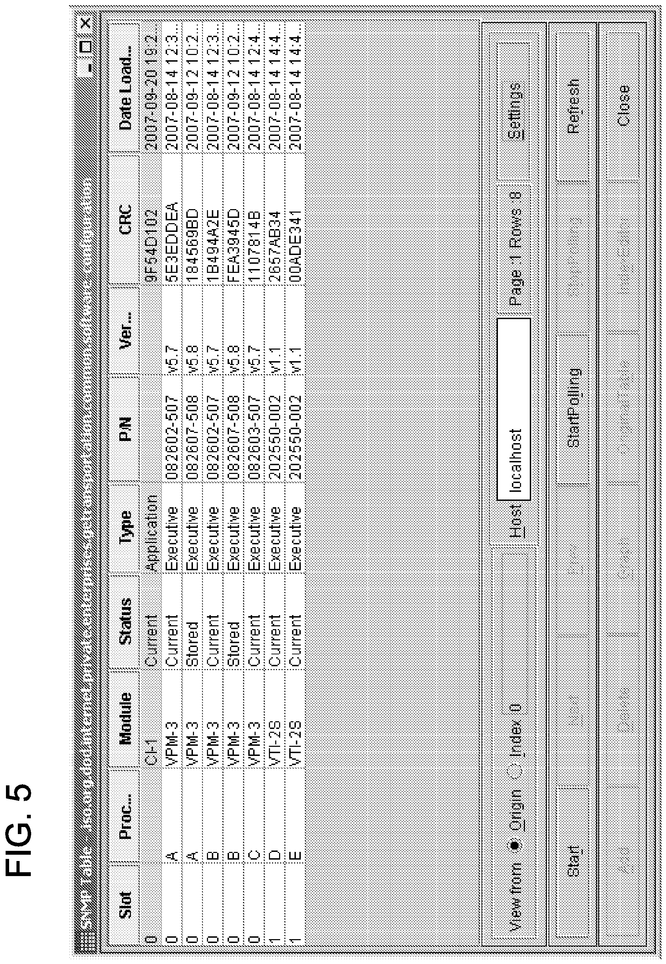

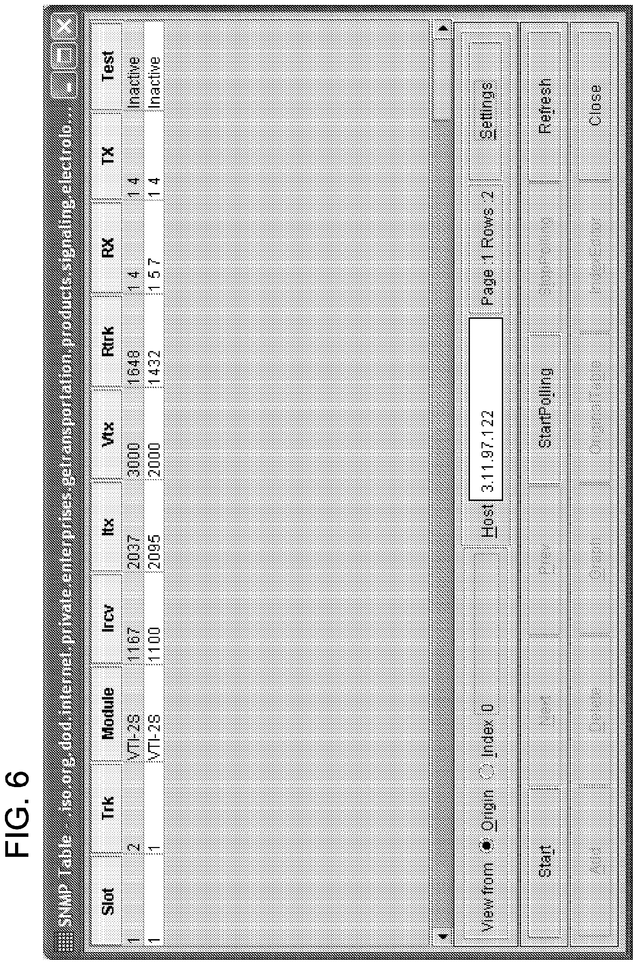

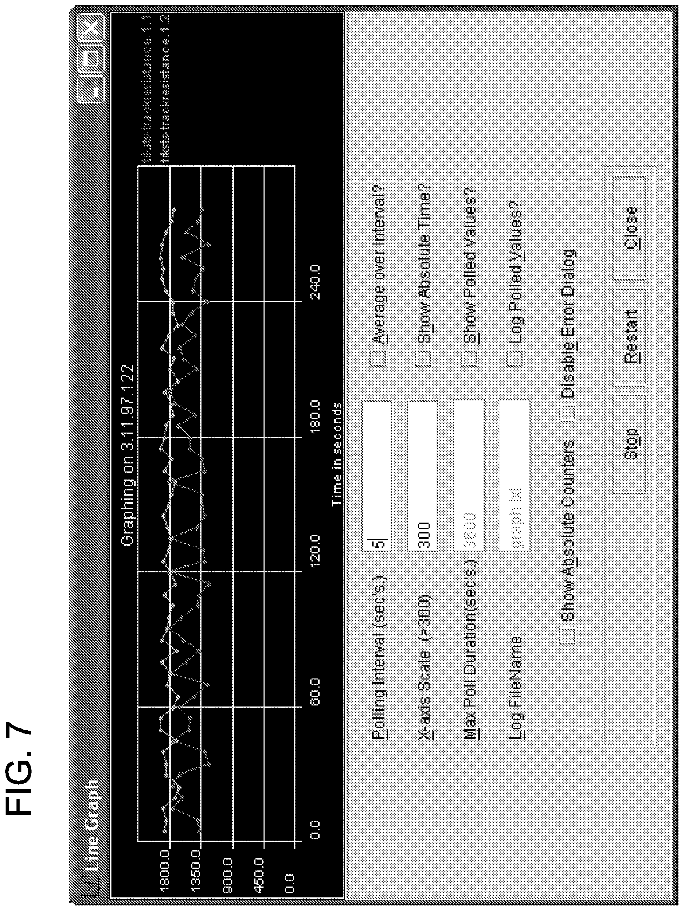

Referring to Figures 5, 6, and 7, in the exemplary embodiment, data obtained from polling railroad devices is shown. In an embodiment, the polling features of SNMP may be used without the trap features. The information from the table in Figure 5 may be used to satisfy government regulations (such as FRA CFR49 Subpart H) to remotely demonstrate software configuration management of safety critical microprocessor based railroad devices. The information in the table in Figure 6 may be used to remotely understand the operational state of a particular hardware module within a railroad device. The information in the user interface in Figure 7 may be used to remotely monitor the behavior of one or many analog or digital parameters in real time for troubleshooting problems that may only occur intermittently.

Polling data may includes, but is not limited to, one or more of the following: product information (e.g., revision, location), hardware/software configuration, system alarms/resets, system time/date, track circuit information, input/output information, ground fault information, lamp control information, crossing information, vital and non-vital communication information, light out conditions, switch correspondence information, system health, timer status, cab signal information, broken rail, AC/DC power conditions, signal overrun, and trailed switches.

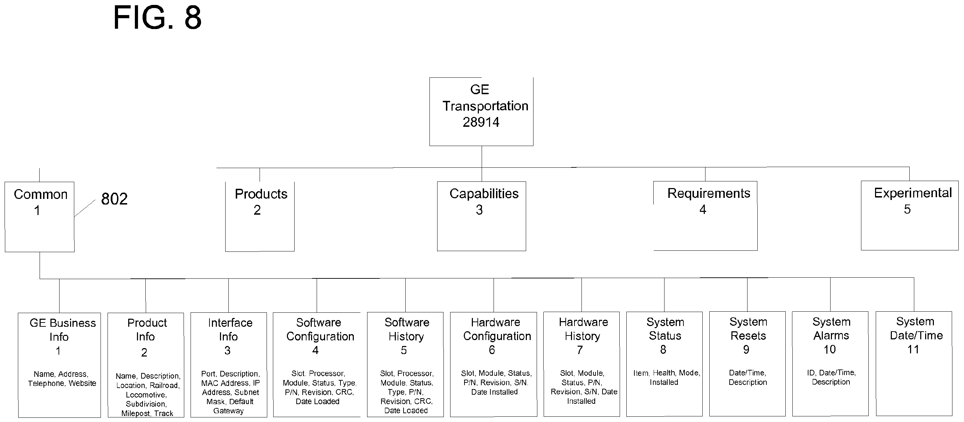

Figure 8 illustrates an exemplary upper level MIB structure 802 that contains objects common to all the railroad devices. The common MIB provides consistency across products for a private enterprise in the location of common variables. In this manner, the railroad operator knows where in the MIB structure to find a common element such as system time, product revision, etc.

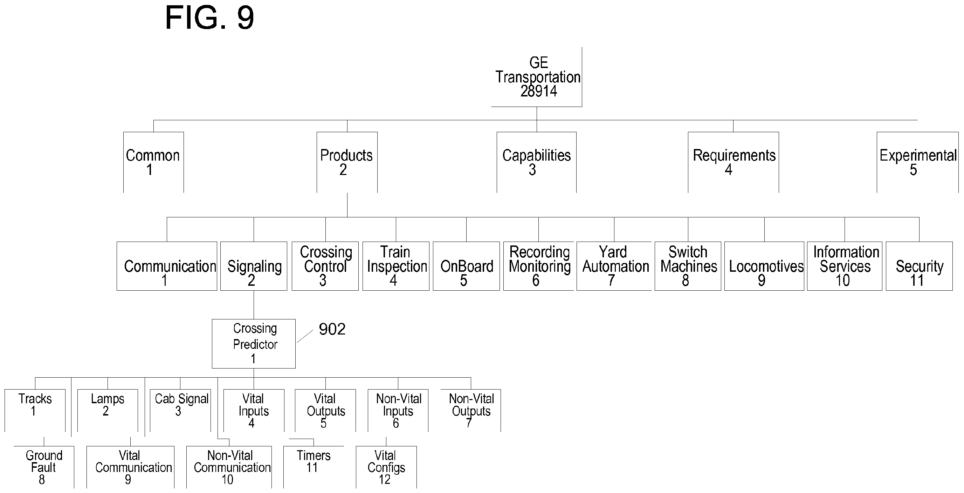

Figure 9 illustrates an exemplary individual product MIB data structure 902 that contains objects specific to each railroad device or product. The information in the MIB structure in Figure 9 includes data more specific to the operation of that device not captured in the common MIB for the private enterprise. In the exemplary user interface in Figure 9, a MIB structure for a railroad at grade crossing controller device is shown. This MIB contains information that can be retrieved about the status of the gates, lights, bells, etc. at a railroad crossing.

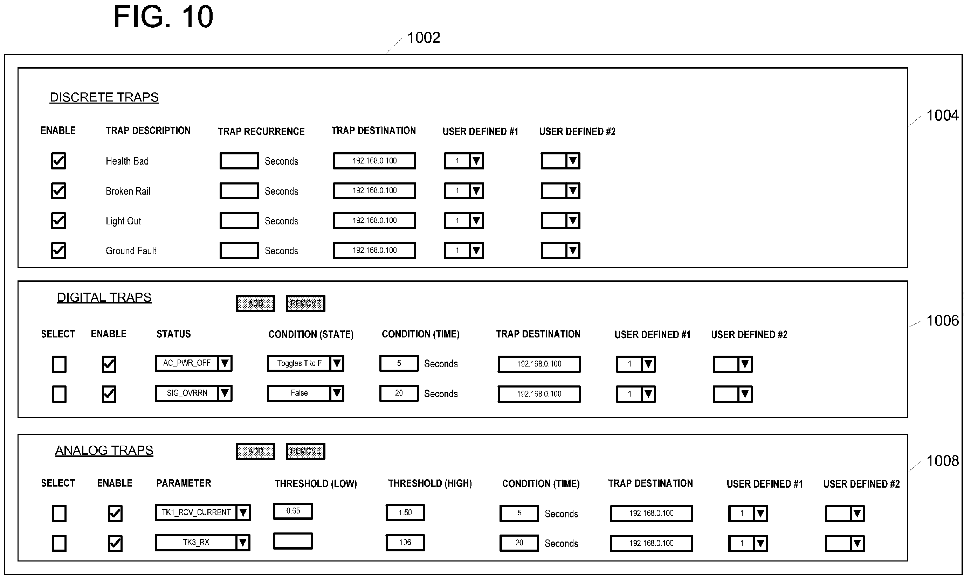

Figure 10 is an exemplary user interface 1002 showing configuration of the SNMP traps. In the example of Figure 10, discrete 1004, digital 1006, and analog 1008 traps are configurable. In the exemplary user interface of Figure 10, discrete traps 1004 are alarms for parameters common to each application of the system. In this exemplary user interface, digital traps 1006 include alarms for digital parameters (e.g., those with Boolean values) if they are in a particular state for toggle to a particular state for a selected amount of time. The digital traps 1006 may be used with application programming of the system to create a trap from any combination of inputs to the system. In the exemplary user interface of Figure 10, analog traps 1008 include alarms for analog parameters (e.g., those with time varying values) if they are above or below a selected threshold for a selected amount of time. These analog traps 1008 may be used to alarm of a condition that may soon require maintenance or other action by the railroad.

The discrete traps 1004 are pre-configured to provide alarms for the system. For example, such alarms may indicate at least one of system resets, system alarms, a bad module health, broken rails, a lamp out, a ground fault, a battery out of range, a high signal, and a low phase. Such data is readily identified by means of a unique identifier and mapped in unique data fields in the MIB. In the exemplary embodiment, the discrete trap 1004 would track such data as, but not limited to, a description of the trap, the recurrence of the trap, a point of source, and a destination of the trap.

The digital traps 1006 may also be used to indicate the status of a toggle or timed state. The digital traps 1006 are for information that is specific to the application programming of that instance of the system. For example, the digital trap 1006 may indicate at least one of a switch out of correspondence, a signal overrun, a trailed switch, an AC power off, a railroad at grade crossing ring-by, and a false railroad at grade crossing activation. Such data is readily identified by means of a unique identifier and mapped in unique data fields in the MIB. In the exemplary embodiment, the digital trap 1006 would track such data as, but not limited to, a status of the trap, a condition of the trap, a condition time, a point of source, and a destination of the trap.

The analog traps 1008 may be used to indicate any parameter beyond a low/high threshold. For example, an analog trap 1008 may indicate at least one of a deteriorating ballast condition, a signal crossing warning time out of range, an overspeed train passing through a crossing, a low battery condition, and an intermittent track circuit. Such data is readily identified by means of a unique identifier and mapped in unique data fields in the MIB. In the exemplary embodiment, the analog trap 1008 tracks data such as, but not limited to, a parameter of the trap, a low threshold, a high threshold, a condition time, a point of source, and a destination of the trap.

The systems and methods described above provide both solicited and unsolicited reporting of alarms by railroad equipment to notify railroad personnel of problems. Embodiments of the invention implement IP protocols for network management, such as SNMP, into processor-based railroad controllers or other railroad equipment. Using such IP protocols, the railroad equipment automatically alerts railroad personnel of a problem, such as, but not limited to, a light out, a falsely activated crossing, and a broken rail. Automatic alarming of railroad equipment using IP-based protocols allows for faster notification of problems. Embodiments of the invention provide for immediate notification that facilitates a faster response time, which could lead to future accident prevention.

Further, railroad personnel may also use the same IP protocols to remotely diagnose problems before sending local maintainers out to address them. Using IP-based protocols, railroad personnel may remotely diagnose the problem while gathering statistics from the equipment. With such knowledge, the problem may be determined remotely and generally isolated before a maintainer is dispatched to the work site. Accordingly, embodiments of the invention facilitate reduced troubleshooting times thereby increasing the efficiency of operations. Proactive diagnostics may also be performed to anticipate and predict failures, and such problems may be corrected before they occur. These protocols may also be used as a means of configuration management of processor-based railroad controllers.

Moreover, a maintainer may be better prepared and equipped before traveling to the site. This facilitates a reduction in overall maintenance costs, which currently is a significant annual expense for railroads. In addition, some railroads are facing large workforce turnover due to impending retirements. With a less skilled workforce, the decreasing amount of higher skilled personnel may be transferred into remote diagnostic centers using these IP-based protocols to troubleshoot from a single location.

Moreover, embodiments of the invention allow railroads to comply with FRA regulations for providing a software configuration management plan for safety critical controllers. Accordingly, railroads have a more immediate and particular knowledge of system wide issues.

A technical effect of an embodiment of the invention is to define data structures for each railroad device where each railroad device populates the corresponding defined data structure with data representing a state of the railroad device. Further, the populated data structures are received by a remote computing device and analyzed to diagnose the railroad devices.

One embodiment of the present invention includes one or more computer-readable media having computer-executable components for providing diagnostic information for railroad equipment. The components include a data structure component, a protocol component, and an interface component. The data structure component is for storing status data in a memory area, with the status data representing a state of a railroad device, and the railroad device being associated with a railroad track. The protocol component is for generating communication data, as a function of a network management protocol, from the status data stored in the memory area by the data structure component. The communication data includes the status data formatted into a management information block. The interface component is for communicating the communication data generated by the protocol component from the railroad device to a computing device via the network management protocol. The railroad device is situated remotely from the computing device. Additionally, the computing device analyzes the status data as a function of the management information block to monitor the railroad device.

In another embodiment, the railroad device comprises a vital device for monitoring safety. Here, the data structure component, the protocol component, and the interface component are embedded within the vital device, e.g., the computer-readable media is embedded or stored in the vital device.

In another embodiment, an object identifier in the computer-readable media is associated with the management information block. The object identifier is uniquely associated with the railroad device with respect to other railroad devices.

In another embodiment, the computer-readable media includes a poll component for generating the status data by periodically polling the railroad device. The generated status data comprises analog data.

### Exemplary Operating Environment

A computing device or computer such as described herein has one or more processors or processing units and a system memory. The computer typically has at least some form of computer readable media. Computer readable media, which include both volatile and nonvolatile media, removable and non-removable media, may be any available medium that may be accessed by computer. By way of example and not limitation, computer readable media comprise computer storage media and communication media. Computer storage media include volatile and nonvolatile, removable and non-removable media implemented in any method or technology for storage of information such as computer readable instructions, data structures, program modules or other data. For example, computer storage media include RAM, ROM, EEPROM, USB memory devices, flash memory or other memory technology, CD-ROM, digital versatile disks (DVD) or other optical disk storage, magnetic cassettes, magnetic tape, magnetic disk storage or other magnetic storage devices, or any other medium that may be used to store the desired information and that may be accessed by computer. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Wired media, such as a wired network or direct-wired connection, and wireless media, such as acoustic, RF, infrared, and other wireless media, are examples of communication media. Combinations of any of the above are also included within the scope of computer readable media.

The system memory includes computer storage media in the form of removable and non-removable, volatile and nonvolatile memory. The computer may operate in a networked environment using logical connections to one or more remote computers, such as a remote computer.

Although described in connection with an exemplary computing system environment, embodiments of the invention are operational with numerous other general purpose or special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the exemplary operating environment. Examples of well known computing systems, environments, and configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the invention may be described in the general context of computer-executable instructions, such as program modules, executed by one or more computers or other devices. The computer-executable instructions may be organized into one or more computer-executable components or modules, such as the components illustrated in Figure 2. Generally, program modules include, but are not limited to, routines, programs, objects, components, and data structures that perform particular tasks or implement particular abstract data types. Aspects of the invention may be implemented with any number and organization of such components or modules. For example, aspects of the invention are not limited to the specific computer-executable instructions or the specific components or modules illustrated in the figures and described herein. Other embodiments of the invention may include different computer-executable instructions or components having more or less functionality than illustrated and described herein. Aspects of the invention may also be practiced in distributed computing environments where tasks are performed by remote processing devices that are linked through a communications network. In a distributed computing environment, program modules may be located in both local and remote computer storage media including memory storage devices.

In operation, a computer executes computer-executable instructions such as those illustrated in the figures to implement aspects of the invention.

The embodiments illustrated and described herein constitute exemplary means for defining data structures corresponding to each of the plurality of railroad devices, exemplary means for analyzing status data received from the railroad devices to diagnose the railroad devices, and exemplary means for formatting data representing a state of a railroad device into a data structure associated with the railroad device.

The order of execution or performance of the operations in embodiments of the invention illustrated and described herein is not essential, unless otherwise specified. That is, the operations may be performed in any order, unless otherwise specified, and embodiments of the invention may include additional or fewer operations than those disclosed herein. For example, it is contemplated that executing or performing a particular operation before, contemporaneously with, or after another operation is within the scope of aspects of the invention.

When introducing elements of aspects of the invention or the embodiments thereof, the articles "a," "an," "the," and "said" are intended to mean that there are one or more of the elements. The terms "comprising," "including," and "having" are intended to be inclusive and mean that there may be additional elements other than the listed elements.

Having described aspects of the invention in detail, it will be apparent that modifications and variations are possible without departing from the scope of aspects of the invention as defined in the appended claims. As various changes could be made in the above constructions, products, and methods without departing from the scope of aspects of the invention, it is intended that all matter contained in the above description and shown in the accompanying drawings shall be interpreted as illustrative and not in a limiting sense.

## Claims

1. A method for remotely monitoring railroad equipment, said method comprising:
defining a data structure corresponding to one or more of a plurality of wayside controller railroad devices (206) located within a railroad infrastructure, wherein each of the wayside controller railroad devices is arranged to populate the corresponding defined data structure with data representing a state of the wayside controller railroad device to provide an alert about a problem;
receiving, by a computing device (204) via a network management protocol, one or more of the populated data structures from the wayside controller railroad devices (206), said computing device being remotely situated from the wayside controller railroad devices, wherein the data received from the wayside controller railroad devices comprises one or more of the following operating parameters of the wayside controller railroad devices (206): a deteriorating ballast condition, a signal crossing warning time out of range, and an intermittent track circuit; and
analyzing the data within the received data structures to diagnose the wayside controller railroad devices providing the alert about the problem.

2. The method of claim 1, wherein the data structure represents a management information block (MIB).

3. The method of claim 1, wherein the network management protocol comprises the simple network management protocol (SNMP).

4. The method of claim 1, wherein the data comprises one or more of the following: fault data, configuration data, safety data, operating parameters, solicited data, unsolicited data, and a digital representation of analog data from the wayside controller railroad devices.

5. The method of claim 1, wherein the wayside controller railroad devices comprise one or more of the following: a crossing controller, a signaling device, a switch machine, a switch monitoring or control system, and a diagnostic device.

6. The method of claim 1, wherein the received data structures comprise one or more of the following: a discrete SNMP trap, a digital SNMP trap, and an analog SNMP trap.

7. The method of claim 1, further comprising polling each of the plurality of wayside controller railroad devices, wherein each of the wayside controller railroad devices populates, responsive to said polling, the corresponding defined data structure with the data representing the state of the wayside controller railroad device, and wherein receiving the populated data structures from the wayside controller railroad devices comprises receiving, responsive to said polling, the populated data structures from the wayside controller railroad devices.

8. A system for remotely monitoring railroad equipment, said system comprising:
a memory area for storing a data structure corresponding to one or more of a plurality of wayside controller railroad devices (206), said plurality of wayside controller railroad devices being located within a railroad infrastructure; and
a processor (210) configured to execute computer-executable instructions for:
receiving, by a computing device via a network management protocol, data from one or more of the wayside controller railroad devices (206), said received data being formatted into the data structure corresponding to the wayside controller railroad devices, said received data representing a state of the wayside controller railroad devices to provide an alert about a problem, wherein the data received from the wayside controller railroad devices comprises one or more of the following operating parameters of the wayside controller railroad devices (206): a deteriorating ballast condition, a signal crossing warning time out of range, and an intermittent track circuit, said computing device being remotely situated from the wayside controller railroad devices; and
analyzing the received data as a function of the corresponding data structures stored in the memory area to identify the state of the wayside controller railroad devices and the alert about the problem.

9. The system of claim 8, wherein the computing device comprises a network management server configured to remotely communicate with the plurality of wayside controller railroad devices.

10. The system of claim 8, wherein the wayside controller railroad devices comprise diagnostic wayside devices each configured to transmit simple network management protocol (SNMP) traps indicating a status of the diagnostic wayside device to the computing device.

11. The system of claim 10, wherein the SNMP traps comprise one or more of the following: a discrete trap, a digital trap, and an analog trap.

12. The system of claim 8, further comprising:
means for defining the data structures corresponding to each of the plurality of wayside controller railroad devices;
means for analyzing the data within the received data structures to diagnose the wayside controller railroad devices; and
means for formatting data representing a state of the wayside controller railroad device into the data structure corresponding to the wayside controller railroad device.

13. The system of claim 8, wherein the memory area further stores a data structure corresponding to all the plurality of wayside controller railroad devices, said data structure corresponding to a common management information block.

## Patentansprüche

1. Verfahren zum Fern-Überwachen von Eisenbahneinrichtungen, wobei das Verfahren aufweist:
Definieren einer Datenstruktur entsprechend einer oder mehrerer einer Mehrzahl von Eisenbahnsteuerungsgeräten (206) an der Strecke, die sich innerhalb einer EisenbahnInfrastruktur befinden,
wobei jedes der Eisenbahnsteuerungsgeräte an der Strecke derart eingerichtet ist, dass es die entsprechend definierte Datenstruktur mit Daten befüllt, die einen Zustand des Eisenbahnsteuerungsgeräts an der Strecke repräsentiert, um einen Alarm bezüglich eines Problems zu liefern;
Empfangen, durch eine Rechenvorrichtung (204) über ein Netzwerkverwaltungsprotokoll, einer oder mehrerer der befüllten Datenstrukturen von den Eisenbahnsteuerungsgeräten an der Strecke (206), wobei die Rechenvorrichtung sich entfernt von den Eisenbahnsteuerungsgeräten an der Strecke befindet, wobei die von den Eisenbahnsteuerungsgeräten an der Strecke empfangenen Daten einen oder mehrere der folgende Betriebsparameter der Eisenbahnsteuerungsgeräte an der Strecke (206) aufweisen:
Eine Verschlechternder-Ballast-Bedingung, eine Signalüberschreitungswarnzeit außerhalb des Bereichs und eine unterbrochene Gleisschaltung; und
Analysieren der Daten innerhalb der empfangenen Datenstrukturen zum Diagnostizieren der Eisenbahnsteuerungsgeräte an der Strecke, die den Alarm bezüglich des Problems liefern.

2. Verfahren gemäß Anspruch 1, wobei die Datenstruktur einen Verwaltungsinformationsblock (MIB) repräsentiert.

3. Verfahren gemäß Anspruch 1, wobei das Netzwerkverwaltungsprotokoll das einfache Netzwerkverwaltungsprotokoll (SNMP) aufweist.

4. Verfahren gemäß Anspruch 1, wobei die Daten eines oder mehr des Folgenden aufweisen: Fehlerdaten, Konfigurationsdaten, Sicherheitsdaten, Betriebsparameter, angeforderte Daten, nicht angeforderte Daten und eine digitale Repräsentation von analogen Daten von den Eisenbahnsteuerungsgeräten an der Strecke.

5. Verfahren gemäß Anspruch 1, wobei die Eisenbahnsteuerungsgeräte an der Strecke eines oder mehr des Folgenden aufweisen:
Eine Überschreitungssteuerung, eine Signalvorrichtung, ein Schaltgerät, ein Schaltüberwachungs- oder Schaltsteuerungssystem und eine Diagnosevorrichtung.

6. Verfahren gemäß Anspruch 1, wobei die empfangenen Datenstrukturen eines oder mehr des Folgenden aufweisen: eine diskrete SNMP-Falle, eine digitale SNMP-Falle und eine analoge SNMP-Falle.

7. Verfahren gemäß Anspruch 1, ferner aufweisend Abfragen jedes der Eisenbahnsteuerungsgeräte an der Strecke, wobei jedes der Eisenbahnsteuerungsgeräte an der Strecke in Reaktion auf das Abfragen die entsprechende definierte Datenstruktur mit den Daten, die den Zustand des Eisenbahnsteuerungsgeräts an der Strecke repräsentiert, befüllt, und wobei empfangen der befüllten Datenstrukturen von den Eisenbahnsteuerungsgeräten an der Strecke aufweist
Empfangen der befüllten Datenstrukturen von den Eisenbahnsteuerungsgeräten in Reaktion auf das Abfragen.

8. System zum entfernten Überwachen von Eisenbahneinrichtungen, wobei das System aufweist:
Einen Speicherbereich zum Speichern einer Datenstruktur, die zu einem oder mehreren einer Mehrzahl von Eisenbahnsteuerungsgeräten an der Strecke (206) gehört, wobei die Mehrzahl von Eisenbahnsteuerungsgeräten an der Strecke sich innerhalb einer Eisenbahninfrastruktur befindet; und
einen Prozessor (210), der eingerichtet ist, Computer-ausführbare Instruktionen auszuführen zum:
Empfangen, durch einen Rechenvorrichtung über ein Netzwerkverwaltungsprotokoll, von Daten von ein oder mehreren der Eisenbahnsteuerungsgeräte an der Strecke (206), wobei die empfangenen Daten in die Datenstruktur, die zu den Eisenbahnsteuerungsgeräten an der Strecke gehört, formatiert wird, wobei die empfangenen Daten einen Zustand der Eisenbahnsteuerungsgeräte an der Strecke repräsentierten, um einen Alarm bezüglich eines Problems zu liefern, wobei die von den Eisenbahnsteuerungsgeräten an der Strecke gelieferten Daten einen oder mehrere der folgenden Betriebsparameter der Eisenbahnsteuerungsgeräte an der Strecke (206) aufweisen: Eine Verschlechternder-Ballast-Bedingung, eine Signalüberschreitungswarnzeit außerhalb des Bereichs und eine unterbrochene Gleisschaltung, wobei sich die Rechenvorrichtung entfernt von den Eisenbahnsteuerungsgeräten an der Strecke befindet; und
Analysieren der empfangenen Daten in Abhängigkeit der in dem Speicherbereich gespeicherten zugehörigen Datenstrukturen, um den Zustand der Eisenbahnsteuerungsgeräte an der Strecke und den Alarm bezüglich des Problems zu identifizieren.

9. System gemäß Anspruch 8, wobei die Rechenvorrichtung einen Netzwerkverwaltungsserver aufweist, der eingerichtet ist, mit der Mehrzahl von Eisenbahnsteuerungsgeräten an der Strecke über Entfernung zu kommunizieren.

10. System gemäß Anspruch 8, wobei die Eisenbahnsteuerungsgeräte an der Strecke Diagnose-Geräte an der Strecke aufweisen, von denen jedes eingerichtet ist zum Übermitteln von Einfaches-Netzwerk-Verwaltungs-Protokoll(SNMP)-Fallen, die der Rechenvorrichtung einen Status des Diagnose-Geräts an der Strecke anzeigen.

11. System gemäß Anspruch 10, wobei die SNMP-Fallen eine oder mehrere der Folgenden aufweisen: Eine diskrete Falle, eine digitale Falle und eine analoge Falle.

12. System gemäß Anspruch 8, ferner aufweisend:
Mittel zum Definieren der Datenstrukturen, die zu jedem der Eisenbahnsteuerungsgeräte an der Strecke gehören;
Mittel zum Analysieren der Daten innerhalb der empfangenen Datenstrukturen zum Diagnostizieren der Eisenbahnsteuerungsgeräte an der Strecke; und
Mittel zum Formatieren von Daten, die einen Zustand des Eisenbahnsteuerungsgeräts an der Strecke repräsentieren, in die Datenstruktur, die zu dem Eisenbahnsteuerungsgerät an der Strecke gehört.

13. System gemäß Anspruch 8, wobei der Speicherbereich ferner eine Datenstruktur speichert, die zu allen der Mehrzahl von Eisenbahnsteuerungsgeräte an der Strecke gehört, wobei die Datenstruktur einem gemeinsamen Verwaltungsinformationsblock entspricht.

## Revendications

1. Procédé de surveillance à distance d'équipements ferroviaires, ledit procédé comprenant les étapes ci-dessous consistant à :
définir une structure de données correspondant à un ou plusieurs dispositifs d'une pluralité de dispositifs ferroviaires à contrôleur en bordure de voie (206) situés dans une infrastructure ferroviaire, dans lequel chacun des dispositifs ferroviaires à contrôleur en bordure de voie est agencé de manière à remplir la structure de données définie correspondante avec des données représentant un état du dispositif ferroviaire à contrôleur en bordure de voie pour fournir une alerte concernant un problème ;
recevoir, par le biais d'un dispositif informatique (204), par l'intermédiaire d'un protocole de gestion de réseau, une ou plusieurs des structures de données remplies en provenance des dispositifs ferroviaires à contrôleur en bordure de voie (206), ledit dispositif informatique étant situé à distance des dispositifs ferroviaires à contrôleur en bordure de voie, dans lequel les données reçues en provenance des dispositifs ferroviaires à contrôleur en bordure de voie comprennent un ou plusieurs des paramètres de fonctionnement suivants des dispositifs ferroviaires à contrôleur en bordure de voie (206) :
un état de ballast en cours de détérioration, un temps d'avertissement de passage à niveau de signal hors plage, et un circuit de voie intermittent ; et
analyser les données au sein des structures de données reçues en vue de diagnostiquer les dispositifs ferroviaires à contrôleur en bordure de voie, et fournir l'alerte concernant le problème.

2. Procédé selon la revendication 1, dans lequel la structure de données représente un bloc d'informations de gestion (MIB).

3. Procédé selon la revendication 1, dans lequel le protocole de gestion de réseau comprend le protocole de gestion de réseau simple (SNMP).

4. Procédé selon la revendication 1, dans lequel les données comprennent une ou plusieurs des données suivantes : des données de défaut, des données de configuration, des données de sécurité, des paramètres de fonctionnement, des données sollicitées, des données non sollicitées, et une représentation numérique de données analogiques provenant des dispositifs ferroviaires à contrôleur en bordure de voie.

5. Procédé selon la revendication 1, dans lequel les dispositifs ferroviaires à contrôleur en bordure de voie comprennent un ou plusieurs des éléments suivants : un contrôleur de passage à niveau, un dispositif de signalisation, une machine d'aiguillage, un système de surveillance ou de commande d'aiguillage et un dispositif de diagnostic.

6. Procédé selon la revendication 1, dans lequel les structures de données reçues comprennent un ou plusieurs des éléments suivants : une interruption de protocole SNMP discrète, une interruption de protocole SNMP numérique et une interruption de protocole SNMP analogique.

7. Procédé selon la revendication 1, comprenant en outre l'étape consistant à interroger chaque dispositif de la pluralité de dispositifs ferroviaires à contrôleur en bordure de voie, dans lequel chacun des dispositifs ferroviaires à contrôleur en bordure de voie remplit, en réponse à ladite interrogation, la structure de données définie correspondante avec les données représentant l'état du dispositif ferroviaire à contrôleur en bordure de voie, et dans lequel l'étape de réception des structures de données remplies en provenance des dispositifs ferroviaires à contrôleur en bordure de voie consiste à recevoir, en réponse à ladite interrogation, les structures de données remplies en provenance des dispositifs ferroviaires à contrôleur en bordure de voie.

8. Système destiné à surveiller à distance des équipements ferroviaires, ledit système comprenant :
une zone de mémoire destinée à stocker une structure de données correspondant à un ou plusieurs dispositifs d'une pluralité de dispositifs ferroviaires à contrôleur en bordure de voie (206), ladite pluralité de dispositifs ferroviaires à contrôleur en bordure de voie étant située au sein d'une infrastructure ferroviaire ; et
un processeur (210) configuré de manière à exécuter des instructions exécutables par ordinateur en vue de :
recevoir, par le biais d'un dispositif informatique, par l'intermédiaire d'un protocole de gestion de réseau, des données en provenance d'un ou plusieurs des dispositifs ferroviaires à contrôleur en bordure de voie (206), lesdites données reçues étant formatées dans la structure de données correspondant aux dispositifs ferroviaires à contrôleur en bordure de voie, lesdites données reçues représentant un état des dispositifs ferroviaires à contrôleur en bordure de voie pour fournir une alerte concernant un problème, dans lequel les données reçues des dispositifs ferroviaires à contrôleur en bordure de voie comprennent un ou plusieurs des paramètres de fonctionnement suivants des dispositifs ferroviaires à contrôleur en bordure de voie (206) : un état de ballast en cours de détérioration, un temps d'avertissement de passage à niveau de signal hors plage, et un circuit de voie intermittent, ledit dispositif informatique étant situé à distance des dispositifs ferroviaires à contrôleur en bordure de voie ; et
analyser les données reçues en fonction des structures de données correspondantes stockées dans la zone de mémoire, afin d'identifier l'état des dispositifs ferroviaires à contrôleur en bordure de voie et l'alerte concernant le problème.

9. Système selon la revendication 8, dans lequel le dispositif informatique comprend un serveur de gestion de réseau configuré de manière à communiquer à distance avec la pluralité de dispositifs ferroviaires à contrôleur en bordure de voie.

10. Système selon la revendication 8, dans lequel les dispositifs ferroviaires à contrôleur en bordure de voie comprennent des dispositifs de diagnostic en bordure de voie configurés chacun de manière à transmettre des interruptions de protocole de gestion de réseau simple (SNMP) indiquant un état du dispositif de diagnostic en bordure de voie au dispositif informatique.

11. Système selon la revendication 10, dans lequel les interruptions de protocole SNMP comprennent un ou plusieurs des éléments suivants : une interruption discrète, une interruption numérique et une interruption analogique.

12. Système selon la revendication 8, comprenant en outre :
un moyen pour définir les structures de données correspondant à chaque dispositif de la pluralité de dispositifs ferroviaires à contrôleur en bordure de voie ;
un moyen pour analyser les données au sein des structures de données reçues afin de diagnostiquer les dispositifs ferroviaires à contrôleur en bordure de voie ; et
un moyen pour formater des données représentant un état du dispositif ferroviaire à contrôleur en bordure de voie dans la structure de données correspondant au dispositif ferroviaire à contrôleur en bordure de voie.

13. Système selon la revendication 8, dans lequel la zone de mémoire stocke en outre une structure de données correspondant à la totalité de la pluralité de dispositifs ferroviaires à contrôleur en bordure de voie, ladite structure de données correspondant à un bloc d'informations de gestion commun.
